# DEMANDE DE BREVET EUROPEEN

(11) **EP 0 840 033 A1**
(43) Date de publication de la demande: **06.05.1998**
(21) Numéro de dépôt: 97402595.9
(22) Date de dépôt: 31.10.1997
(51) Int. Cl.: F16F 7/104, B60R 11/00, B62D 37/04

(54) **Atténuateur de vibrations pour véhicule automobile relié à la structure du véhicule par des liaisons frangibles**

(30) Priorité: 31.10.1996 FR 9613311
(71) Demandeur: RENAULT, 92109 Boulogne-Billancourt (FR)
(72) Inventeur: Lim, Thao, 93800 Epinay Sur Seine (FR)

(57) **Abrégé**

Atténuateur de vibrations pour véhicule automobile, du type comprenant un batteur (2), dont la masse (3) et l'agencement au sein du compartiment moteur dépendent de la gamme de fréquence des vibrations à atténuer, caractérisé en ce que le batteur (2) comporte une masse (3) qui coopère avec un socle par des moyens de solidarisation aptes à libérer la masse (3) au-delà d'un seuil prédéterminé de décélération du véhicule.

## Description

La présente invention concerne un ensemble d'atténuation des vibrations d'un groupe motopropulseur de véhicule automobile, et plus particulièrement la solidarisation d'un tel ensemble à la structure du véhicule.

Les accélérations auxquelles sont soumises les parties mobiles d'un moteur à explosion, telles que les pistons, les bielles ou le vilebrequin sont sources de vibrations et de bruits ; parmi les dispositifs utilisés pour combattre ces vibrations, on trouve les batteurs qui sont des organes dont la fréquence propre est sensiblement égale à la fréquence de résonance des vibrations à traiter, ce qui permet d'atténuer sensiblement l'amplitude des vibrations autour de cette fréquence de résonance.

Ces batteurs sont constitués par des masses dont la valeur dépend de la fréquence ou de la gamme de fréquence des vibrations à traiter et qui sont montés en des points judicieusement choisis du compartiment moteur. A cette fin, ces batteurs sont positionnés au niveau des ventres de vibration au sein du compartiment moteur afin d'en atténuer l'amplitude des vibrations.

Lors d'une collision frontale, un tel batteur qui est un corps dense et de masse assez importante, de l'ordre du kilogramme, favorise l'intrusion dans l'habitacle de la paroi séparant ce dernier du compartiment moteur et augmente donc la probabilité d'occasionner des lésions aux membres inférieurs des occupants du véhicule.

La présente invention a pour objet de pallier l'inconvénient de l'art antérieur et notamment de conserver au batteur des capacités optimales d'atténuation tout en assurant aux occupants une sécurité accrue en cas de choc frontal.

A cet effet, la présente invention propose un atténuateur de vibrations pour véhicule automobile, du type comprenant un batteur, dont la masse et l'agencement au sein du compartiment moteur dépendent de la gamme de fréquence des vibrations à atténuer, caractérisé en ce que le batteur comporte une masse qui coopère avec un socle par des moyens de solidarisation aptes à libérer la masse au-delà d'un seuil prédéterminé de décélération du véhicule.

Selon une autre caractéristique de la présente invention, les moyens de solidarisation comprennent des éléments sécables.

Selon une autre caractéristique de la présente invention, chaque élément sécable est constitué d'un vis dont la partie filetée est séparée de la tête par une zone de moindre résistance.

Selon une autre caractéristique de la présente invention, la zone de moindre résistance est constituée par une gorge réalisée sur toute la périphérie de la vis au pied de la tête et qui définit une zone sécable au delà d'un effort de cisaillement donné.

D'autres caractéristiques et avantages de l'invention apparaîtront à la lecture de la description détaillée qui va suivre, pour la compréhension de laquelle on se reportera aux dessins annexés, dans lesquels :
- la figure 1 est une vue simplifiée en perspective de la partie avant gauche du compartiment moteur d'un véhicule automobile au niveau d'un des supports du groupe motopropulseur,
- la figure 2 est une vue de face d'un batteur,

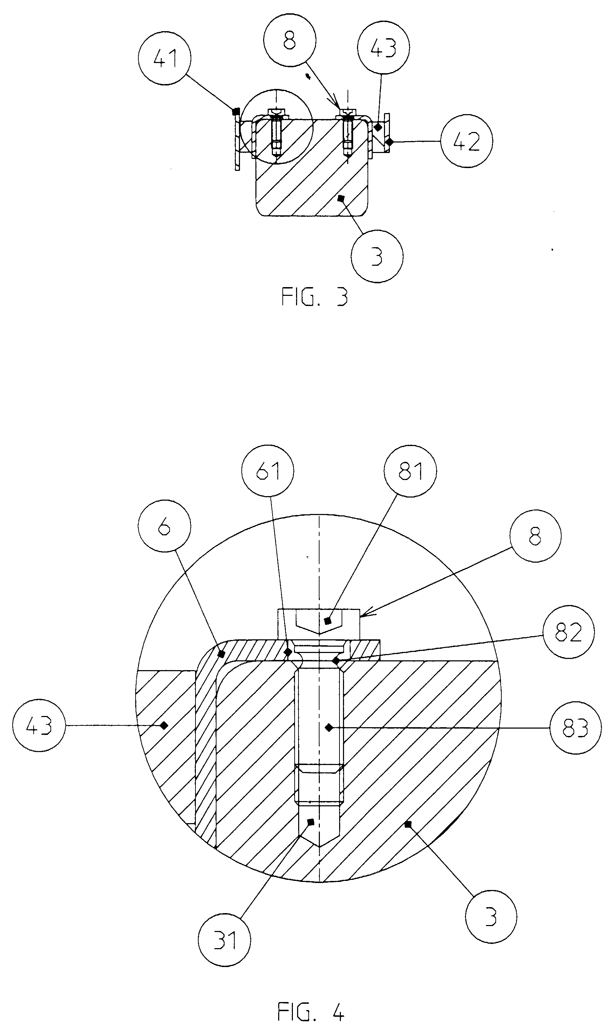

- la figure 3 est une section selon AA de la figure 2,
- la figure 4 est une vue de détail au niveau de la liaison de la masse du batteur avec son socle.

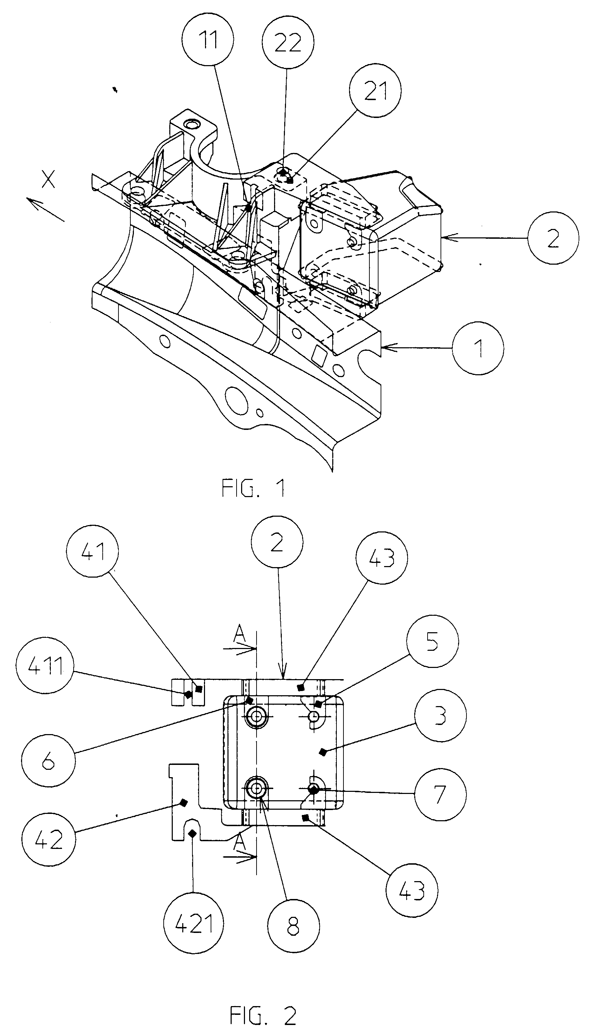

En référence à la figure 1, on a représenté un batteur 2 monté au sein du compartiment moteur d'un véhicule automobile au niveau de la structure avant gauche de la carrosserie du véhicule. L'axe longitudinal du véhicule est indiqué par la flèche référencée X qui est orientée en direction de l'avant du véhicule.

Le batteur 2 est fixé au niveau de la liaison du groupe motopropulseur (non représenté) avec un élément 1 de la structure avant du véhicule par un socle comprenant deux pattes (41,42) de fixation latérales reliées transversalement par une masse 3 d'environ deux kilogrammes constituée par un bloc de fonte ou d'acier présentant une forme sensiblement parallélépipédique. De manière judicieuse, un tel batteur est fixé sur le support du groupe motopropulseur.

L'une des pattes 41 comporte une entaille de positionnement 411 qui coopère avec une nervure 11 formée sur l'élément de structure. Le socle est fixé sur l'élément 1 par une vis 22 qui s'engage dans un perçage de la patte 41.

L'autre patte 42 du socle comporte une encoche 421 dans laquelle vient s'engager un ergot prévu à cet effet sur l'élément 1, lors du montage du batteur 2, ce qui permet d'obtenir une plus grande rigidité de la liaison du batteur 2 sur la structure avant du véhicule.

La masse 3 comporte un trou borgne taraudé et un pion en saillie disposé selon un axe sensiblement parallèle à l'axe longitudinal du véhicule ; un autre pion et un autre trou borgne sont disposés symétriquement de part et d'autre de l'axe longitudinal de la masse.

Chacune des pattes (41,42) du socle comporte un support de la masse 3 qui s'étend transversalement en direction de l'autre patte, sans toutefois que les deux supports ne se rejoignent.

Chaque support comprend une base 43, constituée par un élément en caoutchouc, adhérisée à des éléments de guidage et de retenue (5,6) de la masse 3. La base 43 est adhérisée sur la patte correspondante.

Ces éléments de guidage et de retenue (5,6) de la masse 3 sont constitués d'une aile adhérisée à la base correspondante et qui se prolonge au niveau de ses extrémités et dans un plan perpendiculaire au plan de l'aile par une oreille 6 dotée d'un perçage 61 et d'un élément en forme de demi-lune 5.

Le perçage 61 est d'un diamètre supérieur au diamètre du trou borgne 31. Lors du montage de la masse sur le socle, le trou 61 est disposé coaxialement au trou borgne 31 de la masse et les pions de positionnement en saillie sur la masse viennent s'engager dans les logements prévus au niveau des élément en demi-lune 5.

Des vis 8 appliquent fermement la masse 3 contre les supports. Chaque vis 8 est engagée dans un perçage 61 réalisé dans une oreille 6 et vient se monter dans le trou borgne 31 taraudé de la masse. La tête 81 de la vis 8 prend appui contre l'oreille 6.

Les supports assurent à la fois la fixation et le centrage, les uns par rapport aux autres de la masse 3 et du socle.

La vis 8 comprend une tige filetée prolongée par une partie intermédiaire non filetée et d'une tête 81. La partie intermédiaire 82 reliant la tête 81 à la partie filetée 83 est constituée par une zone de moindre résistance au cisaillement et apte à se rompre au-delà d'un effort tranchant prédéterminé. A cet effet, la zone de moindre résistance est réalisée sous la forme d'une gorge.

Lors du choc, le batteur subit, lors de la phase de décélération du véhicule, un effort dirigé vers l'avant du véhicule. Chacun des points de fixation de la masse sur le support correspondant supporte donc un effort tranchant T ; chaque vis supporte donc cet effort T diminué de l'effort absorbé par le frottement de la tête de la vis au niveau de son plan de joint.

La section maximale de la partie sécable est facilement déterminée à partir de la valeur minimale de la décélération pour laquelle on souhaite une libération du batteur et de la résistance au cisaillement de la vis.

En permettant un éjection du batteur vers l'avant du véhicule lors d'un choc, le dispositif selon l'invention permet une réduction significative de l'intrusion de la paroi de séparation du compartiment moteur et de l'habitacle en cas de choc frontal, l'espace de survie des passagers du véhicule s'en trouve accru d'autant.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Atténuateur de vibrations pour véhicule automobile, du type comprenant un batteur (2), dont la masse (3) et l'agencement au sein du compartiment moteur dépendent de la gamme de fréquence des vibrations à atténuer, caractérisé en ce que le batteur (2) comporte une masse (3) qui coopère avec un socle par des moyens de solidarisation aptes à libérer la masse (3) au-delà d'un seuil prédéterminé de décélération du véhicule.

2. Dispositif selon la revendication 1, caractérisé en ce que les moyens de solidarisation comprennent des éléments sécables.

3. Dispositif selon la revendication 2, caractérisé en ce que chaque élément sécable est constitué d'un vis (8) dont la partie filetée (83) est séparée de la tête (81) par une zone de moindre résistance.

4. Dispositif selon la revendication 3, caractérisé en ce que la zone de moindre résistance est constituée par une gorge (52) réalisée sur toute la périphérie de la vis (8) au pied de la tête (81) et qui définit une zone sécable au delà d'un effort de cisaillement donné.
